# NEUE EUROPÄISCHE PATENTSCHRIFT

(11) **EP 3 271 136 B2**
(45) Veröffentlichungstag und Bekanntmachung des Hinweises auf die Entscheidung über den Einspruch: **19.04.2023**
(45) Hinweis auf die Patenterteilung: 29.04.2020
(21) Anmeldenummer: 16710095.7
(22) Anmeldetag: 15.03.2016
(51) Int. Cl.: B29C 43/02, B29C 43/18

(54) **SONOTRODE FÜR EINE ULTRASCHALL-SCHWEISSANLAGE SOWIE VERFAHREN ZUR VERSCHWEISSUNG EINES ANSCHLUSSELEMENTES MIT EINEM BAUTEIL**
SONOTRODE FOR AN ULTRASOUND WELDING SYSTEM AND METHOD FOR WELDING A CONNECTION ELEMENT TO A COMPONENT
SONOTRODE POUR SYSTÈME DE SOUDAGE PAR ULTRASONS ET PROCÉDÉ DE SOUDAGE D'UN ÉLÉMENT DE RACCORDEMENT À UN COMPOSANT

(30) Priorität: 16.03.2015 DE 102015103799
(43) Veröffentlichungstag der Anmeldung: 24.01.2018
(73) Patentinhaber: REHAU Automotive SE & Co. KG, 95111 Rehau (DE)
(72) Erfinder: SCHWARZ, Ralph, 91710 Gunzenhausen (DE)
(86) Internationale Anmeldenummer: PCT/EP2016/000454
(87) Internationale Veröffentlichungsnummer: WO 2016/146252

(56) Entgegenhaltungen:
- EP-A1- 2 769 830
- EP-A1- 2 873 512
- WO-A1-98/01239
- DE-A1- 10 209 492
- DE-A1-102005 036 908
- DE-A1-102006 006 344
- DE-A1-102009 019 644
- DE-A1-102010 000 968
- DE-A1-102014 212 313
- DE-B2- 2 442 219
- DE-C1- 10 101 415
- DE-C2- 19 828 914
- DE-T2- 69 014 605
- DE-U1- 8 702 983
- US-B1- 6 309 490

## Beschreibung

Die Erfindung betrifft eine Sonotrode für eine Ultraschall-Schweißanlage mit den Merkmalen des Oberbegriffs des Patentanspruchs 1.

Eine Sonotrode zum Ultraschall-Schweißen ist beispielsweise aus der DE 10 2010 000 968 A1 bekannt. Beim Ultraschall-Schweißen handelt es sich um ein Verfahren, welches sich insbesondere zur stoffschlüssigen Verbindung von Bauteilen aus thermoplastischen Kunststoffen eignet. Hierbei wird ein Bauteil bzw. werden beide miteinander zu verbindenden Bauteile an der Schweißstelle durch die Erzeugung von Wärme aufgeschmolzen. Diese Aufschmelzung wird durch eine hochfrequente, mechanische Schwingung der Ultraschall-Sonotrode hervorgerufen. Die für das Aufschmelzen erforderliche Wärme entsteht dabei zwischen den Bauteilen aufgrund von Reibungseffekten, welche durch die hochfrequente Schwingung hervorgerufen werden.

Derartige Sonotroden werden beispielsweise zur Anbindung von sog. PDC-Sensoren (PDC = Park Distance Control) an Außenanbauteilen (z.B. Stoßfängern) von Kraftfahrzeugen eingesetzt. Die PDC-Sensoren dienen in der Regel als Einparkhilfen bzw. als Abstandswarner. Die PDC-Sensoren sind zumeist in mit dem Außenanbauteil verbundenen Adaptern montiert, um eine genaue Positionierung des Sensors am Außenanbauteil des Kraftfahrzeuges sicher zu stellen. Diese Adapter werden nun regelmäßig mit Ultraschall-Sonotroden von innen an die Außenanbauteile angeschweißt. Im Stand der Technik werden die Adapter für PDC-Sensoren beispielsweise mit zwei Stabsonotroden an das Außenanbauteil angeschweißt, wobei die verfahrenstechnische Anbindung der Adapter über zwei Schweißlappen erfolgt. Bei einer solchen Schweißanbindung ist jedoch die vorliegende Festigkeit durch eine physikalisch bedingte Abschälwirkung stark begrenzt. Mit Hilfe einer Ultraschall-Ringsonotrode kann nun eine in sich geschlossene Verschweißung erzielt werden, bei der eine deutlich reduzierte Abschälwirkung festzustellen ist und gleichzeitig eine vorteilhafte geringe Eindringtiefe der Schweißnoppen vorliegt. Durch die geringe Eindringtiefe wird auch das Schweißareal thermisch geringer belastet, was sich wiederum in einer Verringerung von Schweißabzeichnungen widerspiegelt.

Bei nicht durch das Außenanbauteil (z.B. den Kunststoff-Stoßfänger) durchtauchenden Adaptern ist eine Zentrierung des Adapters gegenüber dem Außenanbauteil notwendig. Dies wird gemäß dem Stand der Technik über eine separate Zentrieraufnahme gewährleistet. Eine solche Zentriereinrichtung ist bei einem Einsatz der oben erwähnten Stabsonotroden unproblematisch. Bei einer Ringsonotrode ist dies hingegen nicht der Fall, da die Zentriereinrichtung das Schwingverhalten der Ringsonotrode negativ beeinflussen kann. Um bei Ringsonotroden daher eine Entkopplung zwischen Sonotrode und Zentriereinrichtung zu erreichen, wird gemäß dem Stand der Technik die Ringsonotrode seitlich geöffnet. Über diese Öffnung wird die Zentrierung für den Adapter von außen angebunden und im Zentrum der ringförmigen Sonotrode gehalten. Eine geöffnete Ringsonotrode weist jedoch gegenüber einer geschlossenen Ringsonotrode eine schlechtere Verschweißung auf. Ferner ist das beschriebene Verfahren zur Sicherstellung der Zentrierung vergleichsweise aufwendig.

Die DE 10 2009 019644 A1 offenbart ein kombiniertes Stanz- und Schweißverfahren für Kfz-Stoßfänger. Die US 6 309 490 B1 zeigt eine pneumatisch betriebene Ultraschall-Schweißsonotrode. Eine Sonotrode mit den Merkmalen des Oberbegriffs des Patentanspruchs 1 ist aus der EP 2 769 830 A1 bekannt.

Der Erfindung liegt die Aufgabe zugrunde, eine Sonotrode mit den eingangs beschriebenen Merkmalen anzugeben, welche einerseits zuverlässig und auf einfache Weise eine exakte Zentrierung der zu verschweißenden Werkstücke zueinander ermöglicht und andererseits eine Verschweißung mit hoher Festigkeit gewährleistet.

Diese Aufgabe wird erfindungsgemäß durch die Merkmale im Kennzeichnungsteil des Patentanspruchs 1 gelöst. Vorzugsweise ist der Zentrierdorn an dem Andrückelement angeordnet, insbesondere befestigt. Mittels des erfindungsgemäßen Zentrierdornes im Zentrum der Sonotrode ist es möglich, beide miteinander zu verschweißenden Werkstücke gegenüber der Sonotrode zu zentrieren, woraus im Ergebnis auch beide Werkstücke zueinander exakt zentriert sind. Gemäß der erfindungsgemäßen Lehre kann daher auf die aufwendigen Verfahrensschritte bzw. Konstruktionen, welche im vorstehend beschriebenen Stand der Technik erforderlich sind, verzichtet werden. Gleichzeitig sind unter Anwendung der erfindungsgemäßen Sonotrode keine gestalterischen Einschränkungen hinsichtlich der Kontaktfläche in der Sonotrode vorhanden, wodurch eine optimale Verschweißung gewährleistet werden kann.

Gemäß einer bevorzugten Ausführungsform der Erfindung weist die Kontaktfläche eine geschlossene Ringform auf. Aufgrund des Zentrierdorns im Zentrum der ringförmigen Kontaktfläche ist es nicht erforderlich, die umlaufende Kontaktfläche an einer Stelle zu öffnen, um hier einen Steg für eine Zentrierhalterung durchführen zu können. Stattdessen erfolgt die Zentrierung, wie bereits zuvor beschrieben, sowohl des ersten als auch des zweiten Werkstückpartners über den Zentrierdorn, so dass die beiden Werkstücke und die Ringsonotrode allesamt zueinander exakt zentriert sind. Zweckmäßigerweise ist daher der Zentrierdorn konzentrisch zur ringförmigen Kontaktfläche angeordnet.

Die Mantelfläche des Zentrierdornes bildet eine, vorzugsweise zylindrische, Zentrierfläche. Auf diese Mantelfläche kann gemäß der erfindungsgemäßen Lehre das erste Werkstück aufgeschoben werden, wobei eine entsprechende Ausnehmung in diesem Werkstück den Zentrierdorn passgenau umfasst. Hierdurch ist dieses erste Werkstück gegenüber dem Zentrierdorn und damit gegenüber der Sonotrode zentriert. Erfindungsgemäß weist der Zentrierdorn zusätzlich eine gegenüber der Zentrierfläche verjüngte zylindrische Zentrierspitze auf. Auf dieser Zentrierspitze kann dann das zweite Werkstück, welches ebenfalls über eine entsprechende, passgenau zur Zentrierspitze gestaltete Öffnung verfügt, gegenüber dem Zentrierdorn und damit der Sonotrode zentriert werden. Im Rahmen der Erfindung liegt es ferner, dass bei einer verjüngten Zentrierspitze diese und die Zentrierfläche durch einen, vorzugsweise konischen, Übergangsabschnitt miteinander verbunden sind.

Gemäß einer bevorzugten Ausführungsform der Erfindung weist das Andrückelement eine zylinderförmige Kavität auf, innerhalb der der Zentrierdorn angeordnet ist. Hierbei bildet gemäß einer besonders bevorzugten Ausführungsform der Erfindung die Wandung des Andrückelementes stirnseitig die ringförmige Kontaktfläche. Grundsätzlich kann der Zentrierdorn bodenseitig mit dem Andrückelement verschraubt sein.

Gegenstand der Erfindung ist ferner ein Verfahren zur Verschweißung eines Anschlusselementes, z.B. einer Halterung, insbesondere eines Adapters für einen PDC-Sensor, mit einem Bauteil, z.B. einem Kunststoffbauteil, insbesondere einem Außenanbauteil eines Kraftfahrzeuges, mittels der zuvor beschriebenen Sonotrode. Bei diesem erfindungsgemäßen Verfahren wird zunächst das eine Ausnehmung aufweisende Anschlusselement auf den Zentrierdorn aufgeschoben und hierdurch relativ zur Sonotrode zentriert. Vorzugsweise ist die Ausnehmung ist entsprechend passgenau zur Zentrierfläche des Zentrierdorns gestaltet. Danach durchfasst die Spitze des Zentrierdorns eine Öffnung im Bauteil, wodurch die Sonotrode relativ zum Bauteil zentriert wird. Zweckmäßigerweise ist entspechend die Öffnung im Bauteil passgenau zur Zentrierspitze gestaltet. Die Kontaktfläche der Sonotrode wird an der dem Bauteil abgewandten Seite des Anschlusselementes zur Anlage gebracht. Danach wird mittels der Sonotrode das Anschlusselement mit dem Bauteil verschweißt. Aufgrund der Zentrierung sowohl des Anschlusselementes als auch des Bauteiles gegenüber dem Zentrierdorn ist sichergestellt, dass Anschlusselement und Bauteil passgenau aufeinanderliegen und entsprechend miteinander verschweißt werden können.

Gemäß einer weiteren Ausführungsform der Erfindung ist der Zentrierdorn vom Andrückelement entkoppelt, also nicht mit diesem fest verbunden. Das Andrückelement weist in diesem Fall am Umfang mindestens eine Ausnehmung auf. Vorzugsweise ist diese Ausnehmung von der Kontaktfläche beabstandet, Dadurch kann auch bei dieser Ausführungsform die Kontaktfläche eine geschlossene Ringform aufweisen. Die mindestens eine Ausnehmung wird von einer Halterung durchfasst, an der der Zentrierdorn befestigt ist. Vorzugsweise ist die Halterung quer, insbesondere senkrecht zum Zentrierdorn ausgerichtet. Es können z.B. mindestens zwei Ausnehmungen vorgesehen sein, die zueinander fluchten, d.h. sie sind am Umfang des Andrückelementes um 180° zueinander versetzt angeordnet. Zweckmäßigerweise zentriert die Halterung den Zentrierdorn gegenüber dem Andrückelement radial. Hierzu kann beispielsweise die Halterung kreuzförmig ausgebildet sein und entsprechend vier Ausnehmungen im Andrückelement durchfassen, die jeweils am Umfang des Andrückelementes um 90° zueinander versetzt angeordnet sind.

Im Folgenden wird die Erfindung anhand einer lediglich ein Ausführungsbeispiel darstellenden Zeichnung ausführlich erläutert. Es zeigen schematisch:
- Fig. 1a: eine erfindungsgemäße Sonotrode in einer Querschnittsdarstellung,
- Fig. 1b: die Draufsicht A in Fig. 1a,
- Fig. 2a bis 2d: ein erfindungsgemäßes Verfahren zum Verschweißen eines Anschlusselementes mit einem Kunststoffbauteil und
- Fig. 3a,b; 4a,b: weitere Ausführungsformen der Erfindung in einer den Fig. 1a,b entsprechenden Darstellung.

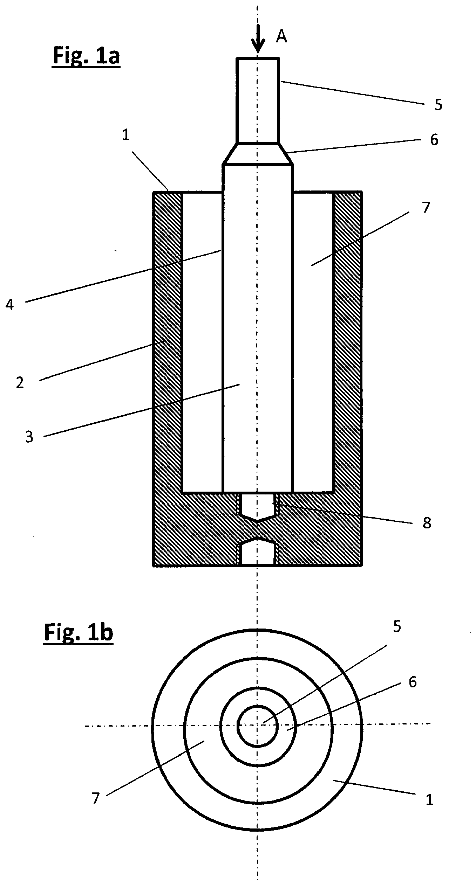

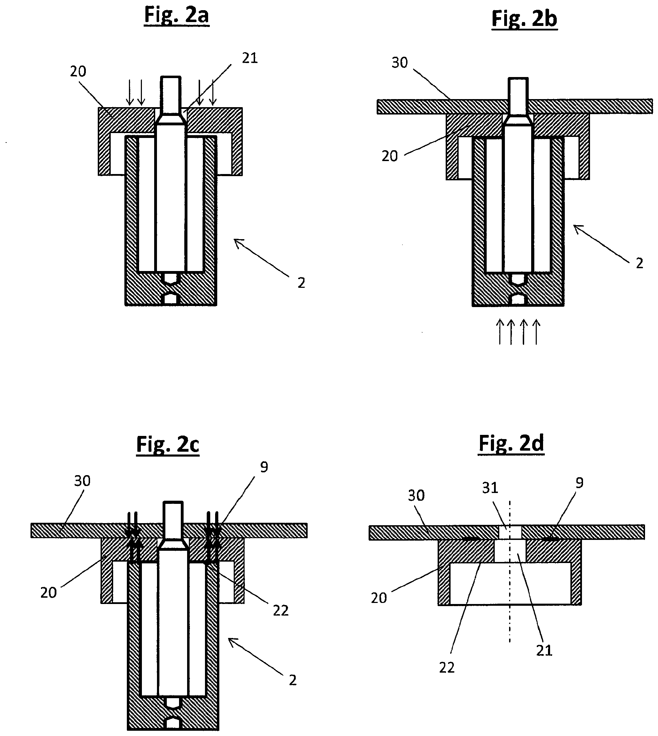

Die Fig. 1a und 1b zeigen eine Sonotrode für eine Ultraschall-Schweißanlage zum Verschweißen von Werkstücken 20, 30. Die Sonotrode weist ein eine Kontaktfläche 1 aufweisendes Andrückelement 2 auf, welches zur Durchführung des Schweißvorgangs mit dieser Kontaktfläche 1 an einem der miteinander zu verschweißenden Werkstücke 20 anlegbar ist (vergl. Fig. 2c). Die Kontaktfläche 1 ist ringförmig ausgebildet. Wie den Fig. 1a,b zu entnehmen ist, ist an dem Andrückelement 2 innerhalb der ringförmigen Kontaktfläche 1 ein axial über die Kontaktfläche 1 vorstehender Zentrierdorn 3 angeordnet. Anhand der Fig. 1b ist erkennbar, dass die Kontaktfläche 1 eine geschlossene Ringform aufweist. Die Fig. 1b zeigt ferner, dass der Zentrierdorn 3 konzentrisch zur ringförmigen Kontaktfläche 1 angeordnet ist. Die Mantelfläche 4 des Zentrierdornes 3 bildet eine im Ausführungsbeispiel zylindrische Zentrierfläche. Der Zentrierdorn 3 weist ferner eine gegenüber der Zentrierfläche 4 verjüngte zylindrische Zentrierspitze 5 auf. Die Zentrierspitze 5 und die Zentrierfläche 4 sind durch einen konischen Übergangsabschnitt 6 miteinander verbunden. Das Andrückelement 2 weist eine zylindrische Kavität 7 auf, innerhalb der der Zentrierdorn 3 angeordnet ist. Die Wandung des Andrückelementes 2 bildet hierbei stirnseitig die ringförmige Kontaktfläche 1. Der Fig. 1a ist ferner zu entnehmen, dass der Zentrierdorn 3 bodenseitig mit dem Andrückelement 2 verschraubt ist. Entsprechend ist innerhalb der Kavität 7 ein Gewinde 8 vorgesehen.

Die Figuren 2a bis 2d zeigen ein erfindungsgemäßes Verfahren zur Verschweißung eines Anschlusselementes 20 mit einem Kunststoffbauteil 30. Im Ausführungsbeispiel handelt es sich bei dem Anschlusselement 20 um einen als Halterung ausgebildeten Adapter aus Kunststoff für einen (nicht dargestellten) PDC-Sensor und bei dem Kunststoffbauteil 30 um ein Außenanbauteil eines Kraftfahrzeuges, beispielsweise einen Stoßfänger aus spritzgegossenem Kunststoff. Das Verfahren wird mit der in den Fig. 1a,b beschriebenen Sonotrode durchgeführt.

Gemäß Fig. 2a wird zunächst das eine Ausnehmung 21 aufweisende Anschlusselement 20 auf den Zentrierdorn 3 aufgeschoben und hierdurch relativ zur Sonotrode zentriert. Entspechend ist die Ausnehmung 21 passgenau zur Zentrierfläche 4 des Zentrierdorns 3 gestaltet.

Gemäß Fig. 2b durchfasst danach die Spitze des Zentrierdorns 3 eine Öffnung 31 im Kunststoffbauteil 30, wobei hierdurch die Sonotrode relativ zum Kunststoffbauteil 30 zentriert wird. Entsprechend ist also die Öffnung 31 passgenau zur zylindrischen Zentrierspitze 5 gestaltet. Vor der Verschweißung wird die Kontaktfläche 1 der Sonotrode an der dem Kunststoffbauteil 30 abgewandten Seite 22 des Anschlusselementes 20 zur Anlage gebracht.

Gemäß Fig. 2c wird sodann mittels der Sonotrode das Anschlusselement 20 mit dem Kunststoffbauteil 30 verschweißt, wobei sich eine umlaufend geschlossene ringförmige Schweißnaht 9 bildet. Die Fig. 2d zeigt die beiden miteinander verschweißten Werkstücke 20, 30, also das Anschlusselement 20 einerseits und das Kunststoffbauteil 30 andererseits nach Entfernung der Sonotrode. Aufgrund des beschriebenen Schweißverfahrens mit dem Zentrierdorn 3 sind beide Teile 20, 30 exakt zueinander zentriert. Die geschlossen ringförmige Schweißnaht 9 ist in Fig. 2d ebenfalls zu erkennen.

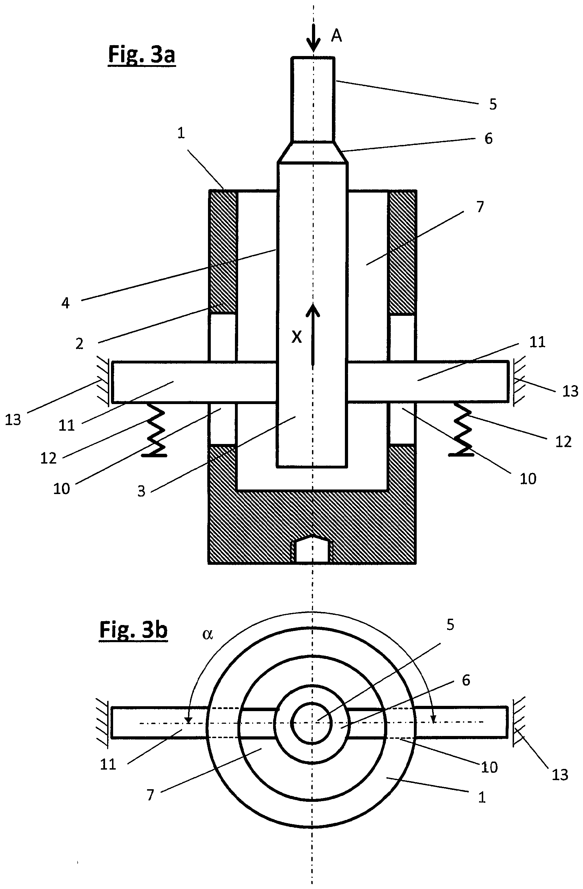

Bei der Ausführungsform gemäß den Fig. 3a,b ist der Zentrierdorn 3 vom Andrückelement 2 entkoppelt, also nicht mit diesem fest verbunden. Das Andrückelement 2 weist hier am Umfang zwei Ausnehmungen 10 auf, die von der Kontaktfläche 1 beabstandet sind, Diese schlitzförmigen, in die axiale Richtung x ausgerichteten Ausnehmungen 10 werden von einer senkrecht zum Zentrierdorn 3 ausgerichteten Halterung 11 durchfasst, an der der Zentrierdorn 3 befestigt ist. Im Ausführungsbeispiel fluchten die Ausnehmungen 10 zueinander, d.h. sie sind am Umfang des Andrückelementes um α = 180° zueinander versetzt angeordnet. Die Konstruktion gemäß Fig. 3a,b ist insgesamt so gestaltet, dass die Halterung 11 den Zentrierdorn 3 gegenüber dem Andrückelement 2 radial zentriert. Der Fig. 3a ist ferner zu entnehmen, dass in axialer Richtung x die stabförmige Halterung 11 mittels Federelementen 12 gefedert und damit schwimmend gelagert ist. Hierdurch können Höhenunterschiede und ein Versatz bei der Fügung zwischen Kunststoffbauteil 30 und Anschlusselement 20 kompensiert werden. Damit ist sichergestellt, dass das Anschlusselement 20 immer zentrisch zur Öffnung 31 im Kunststoffbauteil 30 gefügt wird, ohne die Öffnung 31 oder das Kunststoffbauteil 30 zu beschädigen. Um die radiale Zentrierung des Zentrierdorns 3 zu gewährleisten, ist die Halterung in den Ausnehmungen 10 ohne Spiel geführt. Ferner sind zusätzlich seitliche Führungselemente 13 zur Führung der Enden der Halterung 11 vorgesehen.

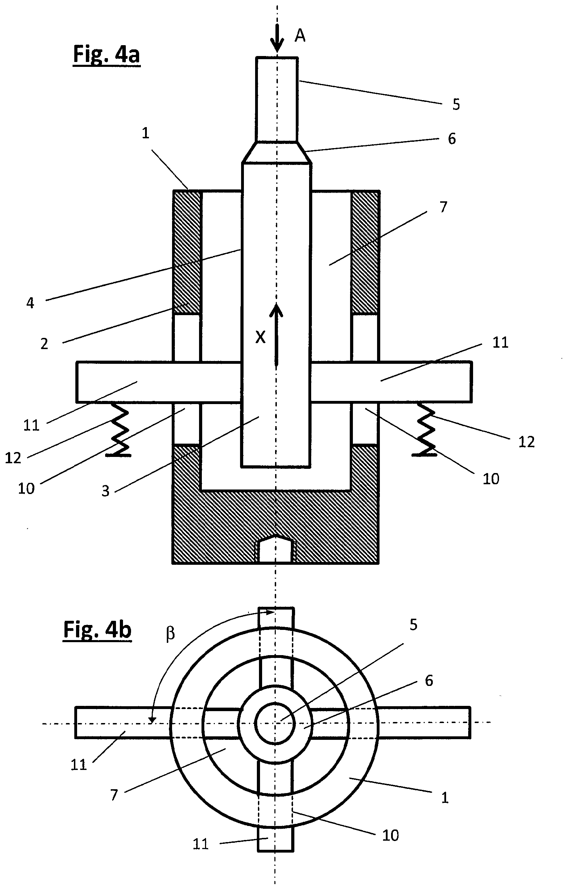

Das Ausführungsbeispiel gemäß Fig. 4a,b unterscheidet sich von der Ausführungsform in Fig. 3a,b dadurch, dass die Halterung 11 zwecks Sicherstellung der radialen Zentrierung des Zentrierdorns 3 kreuzförmig ausgebildet (s. Draufsicht in Fig. 4b). Entsprechend sind hier vier Ausnehmungen 10 im Andrückelement 2 vorgesehen, in denen die kreuzförmige Halterung 11 ohne Spiel in axialer Richtung x geführt wird. Die Ausnehmungen 10 sind am Umfang des Andrückelementes 2 um jeweils den Winkel β = 90° zueinander versetzt angeordnet.

## Patentansprüche

1. Sonotrode für eine Ultraschall-Schweißanlage zum Verschweißen von Werkstücken (20, 30), mit einem eine Kontaktfläche (1) aufweisenden Andrückelement (2), das zur Durchführung des Schweißvorgangs mit dieser Kontaktfläche (1) an einem der miteinander zu verschweißenden Werkstücke (20) anlegbar ist, wobei die Kontaktfläche (1) ringförmig ausgebildet ist, wobei innerhalb der ringförmigen Kontaktfläche (1) ein axial über die Kontaktfläche (1) vorstehender Zentrierdorn (3) angeordnet ist und wobei die Mantelfläche (4) des Zentrierdorns (3) eine zylindrische Zentrierfläche bildet, **dadurch gekennzeichnet, dass** der Zentrierdorn (3) eine gegenüber der Zentrierfläche (4) verjüngte zylindrische Zentrierspitze (5) aufweist.

2. Sonotrode nach Anspruch 1, **dadurch gekennzeichnet, dass** der Zentrierdorn (3) an dem Andrückelement (2) angeordnet, vorzugsweise befestigt, ist.

3. Sonotrode nach Anspruch 1 oder 2, **dadurch gekennzeichnet, dass** die Kontaktfläche (1) eine geschlossene Ringform aufweist.

4. Sonotrode nach einem der Ansprüche 1 bis 3, **dadurch gekennzeichnet, dass** der Zentrierdorn (3) konzentrisch zur ringförmigen Kontaktfläche (1) angeordnet ist.

5. Sonotrode nach einem der Ansprüche 1 bis 4, **dadurch gekennzeichnet, dass** die Zentrierspitze (5) und die Zentrierfläche (4) durch einen, vorzugsweise konischen, Übergangsabschnitt (6) miteinander verbunden sind.

6. Sonotrode nach einem der Ansprüche 1 bis 5, **dadurch gekennzeichnet, dass** das Andrückelement (2) eine, vorzugsweise zylinderförmige, Kavität (7) aufweist, innerhalb der der Zentrierdorn (3) angeordnet ist.

7. Sonotrode nach Anspruch 6, **dadurch gekennzeichnet, dass** die Wandung des Andrückelementes (2) stirnseitig die ringfömige Kontaktfläche (1) bildet.

8. Sonotrode nach einem der Ansprüche 1 bis 7, **dadurch gekennzeichnet, dass** das Andrückelement (2) am Umfang mindestens eine von der Kontaktfläche (1) beabstandete Ausnehmung (10) aufweist, die von einer am Zentrierdorn (3) befestigten, vorzugsweise quer zum Zentrierdorn (3) ausgerichteten, Halterung (11) durchfasst ist.

9. Verfahren zur Verschweißung eines Anschlusselementes (20), insbesondere eines Adapters für einen PDC-Sensor, mit einem Bauteil (30), insbesondere einem Außenanbauteil eines Kraftfahrzeuges, mittels einer Sonotrode nach einem der Ansprüche 1 bis 8,
- wobei zunächst das eine Ausnehmung (21) aufweisende Anschlusselement (20) auf den Zentrierdorn (3) aufgeschoben und hierdurch relativ zur Sonotrode zentriert wird,
- wobei danach die Spitze des Zentrierdorns (3) eine Öffnung (31) im Bauteil (30) durchfasst und hierdurch die Sonotrode relativ zum Bauteil (30) zentriert wird,
- wobei die Kontaktfläche (1) der Sonotrode an der dem Bauteil (30) abgewandten Seite (22) des Anschlusselementes (20) zur Anlage gebracht wird und
- wobei danach mittels der Sonotrode das Anschlusselement (20) mit dem Bauteil (30) verschweißt wird.

## Claims

1. Sonotrode for an ultrasonic welding plant for welding workpieces (20, 30), comprising a pressing element (2) that comprises a contact surface (1) and is used to perform the welding process with this contact surface (1) on one of the workpieces (20) to be welded together, wherein the contact surface (1) is of annular design, wherein a centering mandrel (3) that projects axially over the contact surface (1) is arranged within the annular contact surface (1) and the lateral surface (4) of the centering mandrel (3) forms a cylindrical centering surface, **characterized in that** the centering mandrel (3) comprises a cylindrical centering tip (5) that is tapered with respect to the centering surface (4).

2. Sonotrode according to claim 1, **characterized in that** the centering mandrel (3) is arranged, preferably fixed, on the pressing element (2).

3. Sonotrode according to claim 1 or 2, **characterized in that** the contact surface (1) has a closed annular shape.

4. Sonotrode according to one of claims 1 to 3, **characterized in that** the centering mandrel (3) is arranged concentrically to the annular contact surface (1).

5. Sonotrode according to one of claims 1 to 4, **characterized in that** the centering tip (5) and the centering surface (4) are interconnected by a preferably conical transition section (6).

6. Sonotrode according to one of claims 1 to 5, **characterized in that** the pressing element (2) comprises a preferably cylindrical cavity (7), within which the centering mandrel (3) is arranged.

7. Sonotrode according to claim 6, **characterized in that** the wall of the pressing element (2) on the end face forms the annular contact surface (1).

8. Sonotrode according to one of claims 1 to 7, **characterized in that** the pressing element (2) on the circumference thereof comprises at least one recess (10) spaced apart from the contact surface (1), through which a holder (11) that is fixed to the centering mandrel (3) and is preferably oriented transversely to the centering mandrel (3) passes.

9. Method for welding a connection element (20), in particular an adapter for a PDC sensor, to a component (30), in particular an external attachment of a motor vehicle, using a sonotrode according to one of claims 1 to 8,
- wherein firstly the connection element (20) having a recess (21) is pushed onto the centering mandrel (3) and thereby centered relative to the sonotrode,
- wherein the tip of the centering mandrel (3) then passes through an opening (31) in the component (30), thereby centering the sonotrode relative to the component (30),
- wherein the contact surface (1) of the sonotrode is brought into abutment with the side (22) of the connection element (20) facing away from the component (30), and
- wherein the connection element (20) is then welded to the component (30) using the sonotrode.

## Revendications

1. Sonotrode pour une installation de soudage par ultrasons pour souder des pièces (20, 30), avec un élément de pression (2) présentant une surface de contact (1), qui peut être placé sur une des pièces (20) à souder les unes aux autres pour effectuer l'opération de soudage avec la surface de contact (1), dans laquelle la surface de contact (1) est réalisée en forme d'anneau, dans laquelle une broche de centrage (3) faisant saillie axialement de la surface de contact (1) est disposée à l'intérieur de la surface de contact (1) de forme annulaire, et dans laquelle la surface extérieure (4) de la broche de centrage (3) forme une surface de centrage cylindrique, **caractérisée en ce que** la broche de centrage (3) présente une pointe de centrage (5) cylindrique rétrécie par rapport à la surface de centrage (4).

2. Sonotrode selon la revendication 1, **caractérisée en ce que** la broche de centrage (3) est disposée, de préférence est fixée, sur l'élément de pression (2).

3. Sonotrode selon la revendication 1 ou 2, **caractérisée en ce que** la surface de contact (1) présente une forme annulaire fermée.

4. Sonotrode selon l'une quelconque des revendications 1 à 3, **caractérisée en ce que** la broche de centrage (3) est disposée de manière concentrique par rapport à la surface de contact (1) de forme annulaire.

5. Sonotrode selon l'une quelconque des revendications 1 à 4, **caractérisée en ce que** la pointe de centrage (5) et la surface de centrage (4) sont reliées l'une à l'autre par une section de transition (6) de préférence conique.

6. Sonotrode selon l'une quelconque des revendications 1 à 5, **caractérisée en ce que** l'élément de pression (2) présente une cavité (7) de préférence de forme cylindrique, à l'intérieur de laquelle la broche de centrage (3) est disposée.

7. Sonotrode selon la revendication 6, **caractérisée en ce que** la paroi de l'élément de pression (2) forme côté frontal la surface de contact (1) de forme annulaire.

8. Sonotrode selon l'une quelconque des revendications 1 à 7, **caractérisée en ce que** l'élément de pression (2) présente sur la périphérie au moins un évidement (10) tenu à distance de la surface de contact (1), qui est traversé par une fixation (11) fixée sur la broche de centrage (3), orientée de préférence de manière transversale par rapport à la broche de centrage (3).

9. Procédé de soudage d'un élément de raccordement (20), en particulier d'un adaptateur pour un capteur PDC, à un composant (30), en particulier un composant rapporté extérieur d'un véhicule à moteur, au moyen d'une sonotrode selon l'une quelconque des revendications 1 à 8,
- dans lequel en premier lieu l'élément de raccordement (20) présentant un évidement (21) est enfilé sur la broche de centrage (3) et est centré ce faisant par rapport à la sonotrode,
- dans lequel ensuite la pointe de la broche de centrage (3) traverse une ouverture (31) dans le composant (30) et la sonotrode est ainsi centrée par rapport au composant (30),
- dans lequel la surface de contact (1) de la sonotrode est amenée en appui sur le côté (22), opposé au composant (30), de l'élément de raccordement (20), et
- dans lequel ensuite l'élément de raccordement (20) est soudé au composant (30) au moyen de la sonotrode.
